# EUROPEAN PATENT SPECIFICATION

(11) **EP 2 169 924 B1**
(45) Date of publication and mention of the grant of the patent: **07.09.2011**
(21) Application number: 08165531.8
(22) Date of filing: 30.09.2008
(51) Int. Cl.: H04M 1/725

(54) **Mobile wireless communications device having touch activated near field communications (NFC) circuit**
Mobile drahtlose Kommunikationsvorrichtung mit berührungsaktivierter Nahfeldkommunikationsschaltung
Dispositif de communication mobile sans fil disposant d'un circuit de communications de champ proche tactile activé

(43) Date of publication of application: 31.03.2010
(73) Proprietor: RESEARCH IN MOTION LIMITED, Waterloo, Ontario N2L 3W8 (CA)
(72) Inventor: Moosavi, Vahid, Kitchener, Ontario, N2R 1K6 (CA)
(74) Representative: Fennell, Gareth Charles

(56) References cited:
- WO-A-2007/112787
- US-A1- 2007 124 503

## Description

### Field of the Invention

The present invention relates to the field of communications devices, and more particularly, to mobile wireless communications devices and related systems and methods that use Near Field Communications (NFC).

### Background of the Invention

Cellular communication systems continue to grow in popularity and have become an integral part of both personal and business communications. Cellular telephones and similar devices allow users to place and receive phone calls most anywhere they travel. Moreover, as cellular telephone technology has increased, so too has the functionality of cellular devices. For example, many cellular devices now incorporate Personal Digital Assistant (PDA) features such as calendars, address books, task lists, calculators, memo and writing programs, etc. These multi-function devices usually allow users to send and receive electronic mail (email) messages wirelessly and access the internet via a cellular network and/or a wireless local area network (WLAN), for example.

Some cellular devices incorporate contactless card technology and/or Near Field Communication chips. Near Field Communication technology is commonly used for contactless short-range communications based on radio frequency identification (RFID) standards, using magnetic field induction to enable communication between electronic devices, including mobile wireless communications devices. These short-range applications include payment and ticketing, electronic keys, identification, device set-up service and similar information sharing. This short-range high frequency wireless communication technology exchanges data between devices over a short distance, such as only a few centimeters.

Near Field Communication (NFC) technology is an extension of the ISO 14443 proximity-card standard as a contactless card, RF ID standard that incorporates the interface of a smart card and a reader into one device. A NFC device such as a mobile phone typically includes an NFC integrated circuit (IC) chip that communicates with both existing ISO 14443 smart cards and readers and other NFC devices and compatible with any existing contactless infrastructure. Typically, the NFC IC chips use magnetic field induction where two loop antennas are located near each other and form an air-core transformer. The technology operates on the unlicensed radio frequency ISM band of about 13.56 MHz and has a bandwidth of about 2 MHz. Typically the working distance is about 0 to 20 centimeters, but usually, a user of the NFC device touches another NFC device or tag to initiate communication, with data rates ranging from 106 to about 424 kbit/s. Most mobile wireless communications devices operate in an active communications mode using a modified Miller and 100% amplitude shift keyed (ASK) code unless a passive mode is used in which a Manchester and ASK code is used. Further details are set forth in the Mobile NFC Technical Guidelines, Version 2.0, November 2007 by GSMA, the disclosure which is hereby incorporated by reference in its entirety.

The NFC and RFID communications protocols are based on responding to an external request by sending the universal ID (UID) number. Thus, an NFC-enabled phone (or NFC-enabled credit card) sends its UID to another device without the owner's consent, raising security and privacy concerns. For example, an NFC-enabled credit card, such as the MasterCard PayPass^{™} card, can authenticate a less than $50.00 transaction without the owner's consent by bringing a reader/writer close to the card, for example, even when the card is in an owner's pocket. Also, an NFC-enabled phone is typically used as a reader/writer and uses relatively high power to provide an electromagnetic field for searching and powering up tags. Thus, the NFC radio on a NFC-enabled wireless communications device or other handheld has to be turned on only when required. There are some discussions in the industry for a technical solution allowing the NFC to be on only when a NFC application is running. This is a better solution than having the device "always-on", but this technical solution is inadequate because it compromises the ease-of-use and simplicity that the NFC device is supposed to address. In that technical solution a user must go to the home screen of the mobile wireless communications device and stop the application that the user is currently using and find the correct NFC application, start that correct NFC application and hold the device in front of a reader/tag or other NFC device. This technical solution is cumbersome for a technology that is based on simplicity and ease-of-use.

WO 2007112787 relates to an electronic device (10) and a method for data communication with such an electronic device. The electronic device combines, on the one hand, a Near Field Communication (NFC) interface, including an antenna and a circuit for generating a modulated electromagnetic wave, and on the other hand a user interface including a touch-sensitive display configured to present an object relating to a communication action executable by means of the NFC interface. A control unit connected to the NFC interface and the user interface, is configured to trigger the NFC interface to execute the communication action responsive to simultaneous detection of the presented object being touched and the NFC interface being in communicative connection with a second NFC interface of a second device.

### Summary of the Invention

The invention is set out in the independent claims, with some optional features set out in the claims dependent thereto.

A mobile wireless communications device includes a housing and a circuit board carried by the housing. Radio Frequency (RF) circuitry and a processor are carried by the housing and operative with each other. A Near Field Communications (NFC) circuit is positioned on the circuit board and operative with the processor for communicating in accordance with the NFC communication protocol. A first touch touch activated sensor is supported by the housing and operative for enabling operation of the NFC circuit when touched by a user to establish NFC communications from the communications device.

The mobile wireless communications device has a first touch activated sensor positioned to be touched by at least one finger of the user when the housing is manually grasped and placed near another NFC enabled tag or device. First and second touch activated sensors can be supported by the housing and positioned to be touched by a user to enable the NFC circuit and establish NFC communications. The housing includes opposing sides and a touch activated sensor is positioned at each side of the housing such that both must be touched by a user to establish NFC communications.

A touch activated sensor can be formed as a capacitive touch sensor and be formed as a capacitive-to-digital converter and processor associated therewith. The NFC circuit is formed as a NFC integrated circuit (IC) chip mounted on a circuit board. A power circuit supplies power to the NFC circuit and a switch is connected between the power circuit and connected to a touch activated sensor and operable for switching power ON to the NFC circuit only when the touch activated sensor is touched. A second touch activated sensor can ensure that there are no false positives when the NFC circuit is enabled. A method aspect is also set forth.

### Brief Description of the Drawings

Other objects, features and advantages will become apparent from the detailed description which follows when considered in light of the accompanying drawings in which:

FIG. 1 is a schematic block diagram of an example of a mobile wireless communications device configured as a handheld device that can be used in accordance with non-limiting examples and illustrating basic internal components thereof in accordance with a non-limiting example of the present invention.

FIG. 2 is a front elevation view of the mobile wireless communications device of FIG. 1 in accordance with a non-limiting example.

FIG. 3 is a schematic block diagram showing basic functional circuit components that can be used in the mobile wireless communications device of FIGS. 1-2.

FIG. 4 is another block diagram of an example of a mobile wireless communications device and showing the components for the NFC IC chip, antenna circuit and touch activated sensors in accordance with a non-limiting example.

FIG. 5 is an example of a high-level flowchart illustrating a basic sequence of operation for the touch activated NFC circuit in accordance with a non-limiting example.

### Detailed Description of the Preferred Embodiments

Different embodiments will now be described more fully hereinafter with reference to the accompanying drawings, in which preferred embodiments are shown. Many different forms can be set forth and described embodiments should not be construed as limited to the embodiments set forth herein. Rather, these embodiments are provided so that this disclosure will be thorough and complete, and will fully convey the scope to those skilled in the art. Like numbers refer to like elements throughout.

In accordance with non-limiting examples, a mobile wireless communications device includes a housing and circuit board carried by the housing. One or more circuit boards include a radio frequency (RF) circuit and processor operative with each other. A Near Field Communications (NFC) integrated circuit is operable with the processor for allowing the mobile wireless communications device to operate with other NFC enabled devices and conduct various transactions such as mobile ticketing, mobile payment, smart poster, Bluetooth Pairing, electronic tickets, and numerous other mobile commerce applications. The NFC circuit in one non-limiting example is a separate NFC IC chip positioned such as on the circuit board containing other processors and components.

In this description, touch sensors can refer to touch activated sensors. The mobile wireless communications device includes a first touch sensor and preferably a second touch sensors positioned at the side of the device to activate the NFC circuit on the mobile wireless communications device when the user intends to use the NFC circuitry in the device. Typically, a touch sensor is positioned at each side of the mobile wireless communications device, permitting the user to grasp the device by two fingers and activate the NFC circuit. Typically the touch sensors are located in the middle section at the sides and near the same level as the center of gravity for the device to make it easier for a user to hold the device with two fingers. Otherwise, it would be difficult for the user to balance the device in a quick manner and for efficient operation when trying to activate and use the NFC circuitry.

The touch sensors can be formed as capacitive touch sensors in a a non-limiting example, and when in a finger-detect mode, use very low power (less than about 20 microamperes), and thus, the capacitive touch sensors can be "on" all the time (or perhaps only when backlight is on). Typically, the capacitive touch sensors will be located below the housing in those places that get touched when the user desires to use the NFC circuit. For example, the capacitive touch sensors could be located on both sides of the housing forming the mobile wireless communications device such that the housing can be marked with the location of the capacitive touch sensors. It is also possible to have a NFC logo on the housing of the device and the capacitive touch sensors placed below the NFC logo on the housing. Although capacitive touch sensors are preferred, it should be understood that it is also possible to use a mechanical switch or some other resistive touch sensor if the sensors are placed where there is little chance that the switch or sensors are unintentionally activated, for example, when the mobile wireless communications device is contained in the.pocket of a user.

Any touch sensors used with mobile wireless communications device or similar sensors or switches could also be used for credit cards and NFC tags. The touch sensor that detects the finger touch could be added to the NFC chip in the card and when the user touches the card surface, the NFC circuitry as a radio is activated. A user could touch an area that is marked on the card before the card responds to any NFC reader/writer.

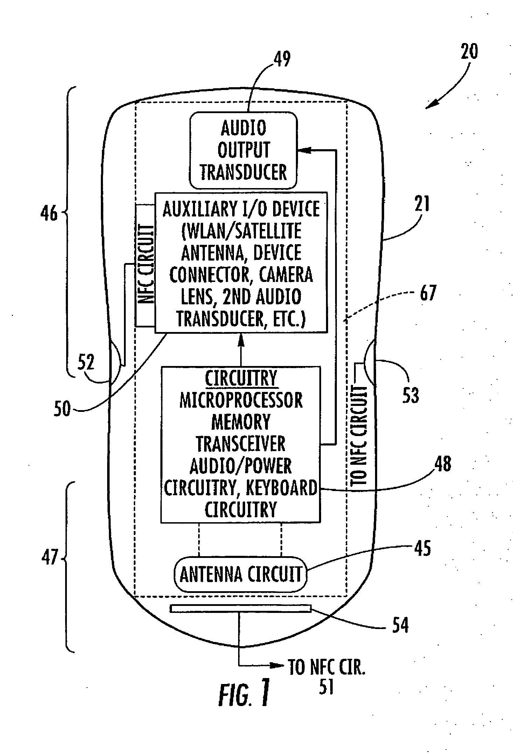

A brief description will now proceed relative to FIGS. 1-3, which discloses an example of a mobile wireless communications device, for example, a handheld portable cellular radio, which can incorporate non-limiting examples of various circuits that can be used with the touch activated Near Field Communications circuitry as will be described in greater detail below. FIGS. 1-3 are representative non-limiting examples of the many different types of functional circuit components and their interconnection, and operative for use with the Near Field Communications circuitry.

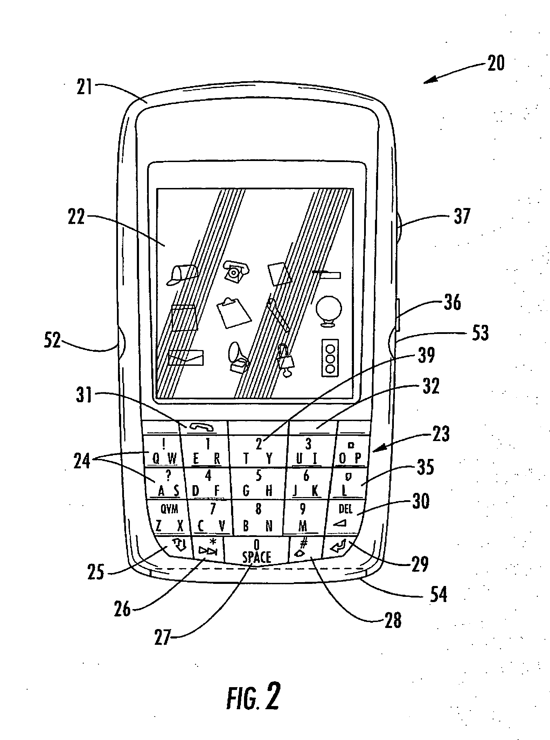

Referring initially to FIGS. 1 and 2, an example of a mobile wireless communications device **20,** such as a handheld portable cellular radio is first described. This device **20** illustratively includes a housing **21** having an upper portion **46** and a lower portion **47,** and a dielectric substrate (i.e., circuit board) **67,** such as a conventional printed circuit board (PCB) substrate, for example, carried by the housing. It should be understood that one or more circuit boards can be used. The NFC circuit could be on one circuit board and the processor and other circuitry on another circuit board. A housing cover (not shown in detail) would typically cover the front portion of the housing. The term circuit board **67** as used hereinafter can refer to any dielectric substrate, PCB, ceramic substrate or other circuit carrying structure for carrying signal circuits and electronic components within the mobile wireless communications device **20.** The illustrated housing **21** is a static housing, for example, as opposed to a flip or sliding housing which are used in many cellular telephones. However, these and other housing configurations may also be used.

Circuitry **48** is carried by the circuit board 67, such as a microprocessor, memory, one or more wireless transceivers (e.g., cellular, WLAN, etc.), which includes RF circuitry, including audio and power circuitry, including any keyboard circuitry. It should be understood that keyboard circuitry could be on a separate keyboard, etc., as will be appreciated by those skilled in the art. A battery (not shown) is also preferably carried by the housing **21** for supplying power to the circuitry **48.** The term RF circuitry could encompass the interoperable RF transceiver circuitry, power circuitry and audio circuitry.

Furthermore, an audio output transducer **49** (e.g., a speaker) is carried by an upper portion **46** of the housing **21** and connected to the circuitry **48.** One or more user input interface devices, such as a keypad (keyboard) **23** (FIG. 2), is also preferably carried by the housing **21** and connected to the circuitry **48.** The term keypad as used herein also refers to the term keyboard, indicating the user input devices having lettered and/or numbered keys commonly known and other embodiments, including multi-top or predictive entry modes. Other examples of user input interface devices include a scroll wheel **37** and a back button **36.** Of course, it will be appreciated that other user input interface devices (e.g., a stylus or touch screen interface) may be used in other embodiments.

An antenna **45** is preferably positioned at the lower portion **47** in the housing and can be formed as a pattern of conductive traces that make an antenna circuit, which physically forms the antenna. It is connected to the circuitry **48** on the main circuit board **67.** In one non-limiting example, the antenna could be formed on an antenna circuit board section that extends from the main circuit board at the lower portion of the housing. By placing the antenna **45** adjacent the lower portion **47** of the housing **21,** the distance is advantageously increased between the antenna and the user's head when the phone is in use to aid in complying with applicable SAR requirements. Also, a separate keyboard circuit board could be used.

More particularly, a user will typically hold the upper portion of the housing **21** very close to his head so that the audio output transducer **49** is directly next to his ear. Yet, the lower portion **47** of the housing **21** where an audio input transducer (i.e., microphone) is located need not be placed directly next to a user's mouth, and can be held away from the user's mouth. That is, holding the audio input transducer close to the user's mouth may not only be uncomfortable for the user, but it may also distort the user's voice in some circumstances. In addition, the placement of the antenna **45** adjacent the lower portion **47** of the housing **21** also advantageously spaces the antenna farther away from the user's brain.

Another important benefit of placing the antenna **45** adjacent the lower portion **47** of the housing **21** is that this may allow for less impact on antenna performance due to blockage by a user's hand. That is, users typically hold cellular phones toward the middle to upper portion of the phone housing, and are therefore more likely to put their hands over such an antenna than they are an antenna mounted adjacent the lower portion **47** of the housing **21.** Accordingly, more reliable performance may be achieved from placing the antenna **45** adjacent the lower portion **47** of the housing **21.**

Still another benefit of this configuration is that it provides more room for one or more auxiliary input/output (I/O) devices **50** to be carried at the upper portion **46** of the housing. Furthermore, by separating the antenna **45** from the auxiliary I/O device(s) **50,** this may allow for reduced interference therebetween.

Some examples of auxiliary I/O devices **50** include a WLAN (e.g., Bluetooth, IEEE 802.11) antenna for providing WLAN communication capabilities, and/or a satellite positioning system (e.g., GPS, Galileo, etc.) antenna for providing position location capabilities, as will be appreciated by those skilled in the art. Other examples of auxiliary I/O devices **50** include a second audio output transducer (e.g., a speaker for speaker phone operation), and a camera lens for providing digital camera capabilities, an electrical device connector (e.g., USB, headphone, secure digital (SD) or memory card, etc.).

It should be noted that the term "input/output" as used herein for the auxiliary I/O device(s) 50 means that such devices may have input and/or output capabilities, and they need not provide both in all embodiments. That is, devices such as camera lenses may only receive an optical input, for example, while a headphone jack may only provide an audio output.

As illustrated in FIG. 1, a separate NFC circuit chip **51** can be associated with other input/output devices and be operably connected to side mounted touch sensors **52, 53,** such as capacitive touch sensors. A third touch sensor **54,** such as a capacitive touch sensor can be located at the bottom of the device and used for determining that there are no "false positives," as will be explained in detail below. For example, the third capacitive touch sensor **54** would be positioned such that if the two side capacitive touch sensors **52** and **53** are activated while the third capacitive touch sensor is activated, the NFC circuit 51 will not be activated.

The device **20** further illustratively includes a display **22,** for example, a liquid crystal display (LCD) carried by the housing **21** and connected to the circuitry **48.** A back button **36** and scroll wheel **37** can also be connected to the circuitry **48** for allowing a user to navigate menus, text, etc., as will be appreciated by those skilled in the art. The scroll wheel **37** may also be referred to as a "thumb wheel" or a "track wheel" in some instances. The keypad **23** illustratively includes a plurality of multi-symbol keys **24** each having indicia of a plurality of respective symbols thereon. The keypad **23** also illustratively includes an alternate function key **25,** a next key **26,** a space key **27,** a shift key **28,** a return (or enter) key **29,** and a backspace/delete key **30.**

The next key **26** is also used to enter a "*" symbol upon first pressing or actuating the alternate function key **25.** Similarly, the space key **27,** shift key **28** and backspace key **30** are used to enter a "0" and "#", respectively, upon first actuating the alternate function key **25.** The keypad **23** further illustratively includes a send key **31,** an end key **32,** and a convenience (i.e., menu) key **39** for use in placing cellular telephone calls, as will be appreciated by those skilled in the art.

Moreover, the symbols on each key **24** are arranged in top and bottom rows. The symbols in the bottom rows are entered when a user presses a key **24** without first pressing the alternate function key **25,** while the top row symbols are entered by first pressing the alternate function key. As seen in FIG. 2, the multi-symbol keys **24** are arranged in the first three rows on the keypad **23** below the send and end keys **31, 32.** Furthermore, the letter symbols on each of the keys **24** are arranged to define a QWERTY layout. That is, the letters on the keypad **23** are presented in a three-row format, with the letters of each row being in the same order and relative position as in a standard QWERTY keypad.

Each row of keys (including the fourth row of function keys **25-29**) is arranged in five columns. The multi-symbol keys 24 in the second, third, and fourth columns of the first, second, and third rows have numeric indicia thereon (i.e., 1 through 9) accessible by first actuating the alternate function key **25.** Coupled with the next, space, and shift keys **26, 27, 28,** which respectively enter a "*", "0", and "#" upon first actuating the alternate function key **25,** as noted above, this set of keys defines a standard telephone keypad layout, as would be found on a traditional touch-tone telephone, as will be appreciated by those skilled in the art.

Accordingly, the mobile wireless communications device **20** as described may advantageously be used not only as a traditional cellular phone, but it may also be conveniently used for sending and/or receiving data over a cellular or other network, such as Internet and email data, for example. Of course, other keypad configurations may also be used in other embodiments. Multi-tap or predictive entry modes may be used for typing e-mails, etc. as will be appreciated by those skilled in the art.

The antenna **45** is preferably formed as a multifrequency band antenna, which provides enhanced transmission and reception characteristics over multiple operating frequencies. More particularly, the antenna **45** is designed to provide high gain, desired impedance matching, and meet applicable SAR requirements over a relatively wide bandwidth and multiple cellular frequency bands. By way of example, the antenna **45** preferably operates over five bands, namely a 850 MHz Global System for Mobile Communications (GSM) band, a 900 MHz GSM band, a DCS band, a PCS band, and a WCDMA band (i.e., up to about 2100 MHz), although it may be used for other bands/frequencies as well. To conserve space, the antenna **45** may advantageously be implemented in three dimensions although it may be implemented in two-dimensional or planar embodiments as well.

The mobile wireless communications device shown in FIGS. 1 and 2 can incorporate e-mail and messaging accounts and provide different functions such as composing e-mail, PIN messages, and SMS messages. The device can manage messages through an appropriate menu that can be retrieved by choosing a messages icon. An address book function could add contacts, allow management of an address book, set address book options and manage SIM card phone books. A phone menu could allow for the making and answering of phone calls using different phone features, managing phone call logs, setting phone options, and viewing phone information. A browser application could permit the browsing of web pages, configuring a browser, adding bookmarks, and changing browser options. Other applications could include a task, memo pad, calculator, alarm and games, as well as handheld options with various references.

A calendar icon can be chosen for entering a calendar program that can be used for establishing and managing events such as meetings or appointments. The calendar program could be any type of messaging or appointment/meeting program that allows an organizer to establish an event, for example, an appointment or meeting.

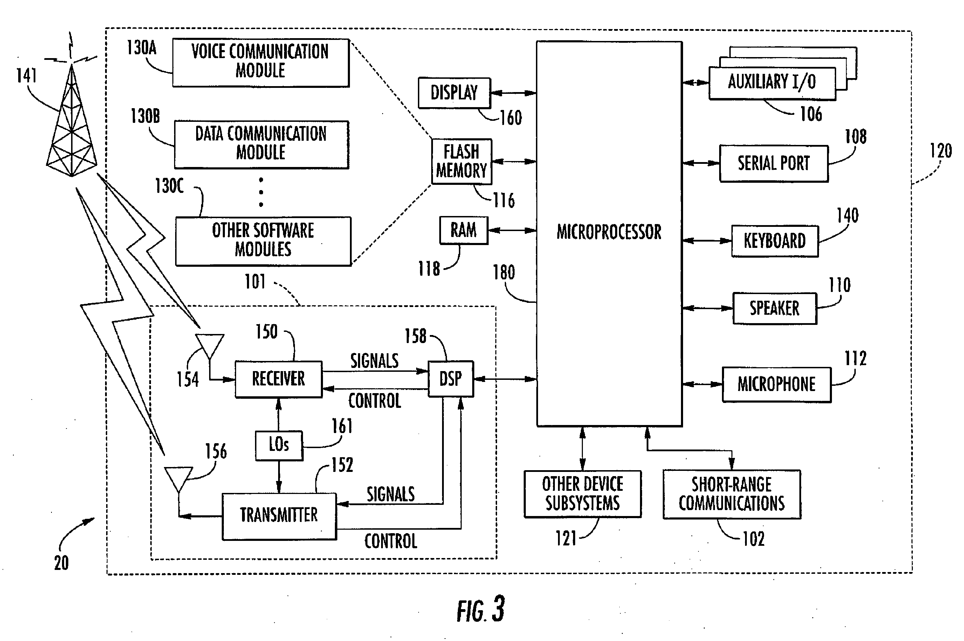

A non-limiting example of various functional components that can be used in the exemplary mobile wireless communications device **20** of FIGS. 1 and 2 is further described in the example below with reference to FIG. 3. The device **20** illustratively includes a housing **120,** a keypad **140** and an output device **160.** The output device **160** shown is preferably a display, which is preferably a full graphic LCD. Other types of output devices may alternatively be used. A processing device **180** is contained within the housing **120** and is coupled between the keypad **140** and the display **160.** The processing device **180** controls the operation of the display **160,** as well as the overall operation of the mobile device **20,** in response to actuation of keys on the keypad **140** by the user.

The housing **120** may be elongated vertically, or may take on other sizes and shapes (including clamshell housing structures). The keypad may include a mode selection key, or other hardware or software for switching between text entry and telephony entry.

In addition to the processing device **180,** other parts of the mobile device 20 are shown schematically in FIG. 3. These include a communications subsystem **101;** a short-range communications subsystem **102;** the keypad **140** and the display **160,** along with other input/output devices **106, 108, 110** and **112;** as well as memory devices **116, 118** and various other device subsystems **121.** The mobile device **20** is preferably a two-way RF communications device having voice and data communications capabilities. In addition, the mobile device **20** preferably has the capability to communicate with other computer systems via the Internet.

Operating system software executed by the processing device **180** is preferably stored in a persistent store, such as the flash memory **116,** but may be stored in other types of memory devices, such as a read only memory (ROM) or similar storage element. In addition, system software, specific device applications, or parts thereof, may be temporarily loaded into a volatile store, such as the random access memory (RAM) **118.** Communications signals received by the mobile device may also be stored in the RAM **118.**

The processing device **180,** in addition to its operating system functions, enables execution of software applications **130A-130N** on the device **20.** A predetermined set of applications that control basic device operations, such as data and voice communications **130A** and **130B,** may be installed on the device **20** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **141.** Preferably, the PIM data items are seamlessly integrated, synchronized and updated via the wireless network 141 with the device user's corresponding data items stored or associated with a host computer system.

Communication functions, including data and voice communications, are performed through the communications subsystem **101,** and possibly through the short-range communications subsystem. The communications subsystem **101** includes a receiver **150,** a transmitter **152,** and one or more antennae **154** and **156.** In addition, the communications subsystem **101** also includes a processing module, such as a digital signal processor (DSP) **158,** and local oscillators (LOs) **161.** The specific design and implementation of the communications subsystem **101** is dependent upon the communications network in which the mobile device **20** is intended to operate. For example, the mobile device **20** may include a communications subsystem **101** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, PCS, GSM, etc. Other types of data and voice networks, both separate and integrated, may also be utilized with the mobile device **20.**

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **20** may send and receive communications signals over the communication network **141.** Signals received from the communications network **141** by the antenna **154** are routed to the receiver **150,** which provides for signal amplification, frequency down conversion, filtering, channel selection, etc., and may also provide analog to digital conversion. Analog-to-digital conversion of the received signal allows the DSP **158** to perform more complex communications functions, such as demodulation and decoding. In a similar manner, signals to be transmitted to the network **141** are processed (e.g., modulated and encoded) by the DSP **158** and are then provided to the transmitter **152** for digital to analog conversion, frequency up conversion, filtering, amplification and transmission to the communication network **141** (or networks) via the antenna **156.**

In addition to processing communications signals, the DSP **158** provides for control of the receiver **150** and the transmitter **152.** For example, gains applied to communications signals in the receiver **150** and transmitter **152** may be adaptively controlled through automatic gain control algorithms implemented in the DSP **158.**

In a data communications mode, a received signal, such as a text message or web page download, is processed by the communications subsystem **101** and is input to the processing device **180.** The received signal is then further processed by the processing device **180** for an output to the display **160,** or alternatively to some other auxiliary I/O device **106.** A device user may also compose data items, such as e-mail messages, using the keypad **140** and/or some other auxiliary I/O device **106,** such as a touchpad, a rocker switch, a thumb-wheel, or some other type of input device. The composed data items may then be transmitted over the communications network **141** via the communications subsystem **101.**

In a voice communications mode, overall operation of the device is substantially similar to the data communications mode, except that received signals are output to a speaker **110,** and signals for transmission are generated by a microphone **112.** Alternative voice or audio I/O subsystems, such as a voice message recording subsystem, may also be implemented on the device **20.** In addition, the display **160** may also be utilized in voice communications mode, for example to display the identity of a calling party, the duration of a voice call, or other voice call related information and the NFC communications.

Any short-range communications subsystem enables communication between the mobile device 20 and other proximate systems or devices, which need not necessarily be similar devices. For example, the short-range communications subsystem may include an infrared device and associated circuits and components, or a Bluetooth^{™} communications module to provide for communication with similarly-enabled systems and devices and the NFC communications.

It should be understood that GSM is a preferred communications system and uses a radio interface that can have an uplink frequency band and downlink frequency band with about 25 MHz bandwidth, typically subdivided into 124 carrier frequency channels, each spaced about 200 KHz apart as non-limiting examples. Time division multiplexing can be used to allow about 8 speech channels per radio frequency channel, giving 8 radio time slots and 8 burst periods grouped into what is called a TDMA frame. For example, a channel data rate could be about 270.833 Kbps and a frame duration of about 4.615 milliseconds (MS) in one non-limiting example. The power output can vary from about 1 to about 2 watts.

Typically, linear predictive coding (LPC) can be used to reduce the bit rate and provide parameters for a filter to mimic a vocal track with speech encoded at about 13 Kbps. Four different cell sizes can be used in a GSM network, including macro, micro, pico and umbrella cells. A base station antenna can be installed on a master building above the average rooftop level in a macrocell. In a microcell, the antenna height can be under the average rooftop level and used in urban areas. Microcells typically have a diameter of about a few dozen meters and are used indoors. Umbrella cells can cover shadowed regions or smaller cells. Typically, the longest distance for the GSM specification covered by an antenna is about 22 miles depending on antenna height, gain and propagation conditions.

GSM systems typically include a base station subsystem, a network and switching subsystem, and a General Packet Radio Service (GPRS) core network. A subscriber identify module (SIM) is usually implemented in the communications device, for example, the well known SIM card, similar to a smart card containing the subscription information and phone book of a user. The user can also switch handsets or could change operators by changing a SIM.

The GSM signaling protocol has three general layers. Layer 1 is a physical layer using channel structures above the air interface. Layer 2 is the data link layer. Layer 3 is a signaling protocol, which includes three sublayers. These include a Radio Resources Management sublayer to control the setup, maintenance and termination of radio and fixed channels, including handovers. A Mobility Management sublayer manages the location updating and registration procedures and secures the authentication. A Connection Management sublayer handles general call control and manages supplementary services and the short message service. Signaling between different entities such as the Home Location Register (HLR) and Visiting Location Register (VLR) can be accomplished through a Mobile Application Part (MAP) built upon the Transaction Capabilities Application Part (TCAP) of the top layer of the Signaling System No. 7.

A Radio Resources Management (RRM) sublayer can oversee the radio and fixed link establishment between the mobile station and an MSE.

It is also possible to used Enhanced Data Rates for GSM Evolution (EDGE), as an enhancement to General Packet Radio Service (GPRS) networks. EDGE can use 8 Phase Shift Keying (8 PSK) and Gaussian Minimum Shift Keying (GMSK) for different modulation and coding schemes. A three-bit word can be produced for every changing carrier phase. A rate adaptation algorithm can adapt the Modulation and Coding Scheme (MCS) according to the quality of the radio channel and the bit rate and robustness of data transmission. Base stations are typically modified for EDGE use.

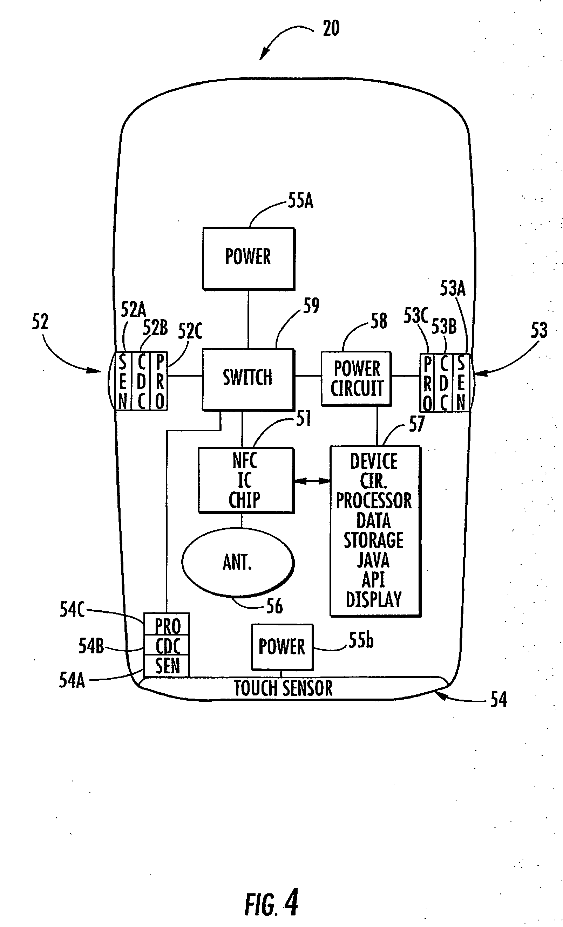

FIG. 4 is another block diagram of the mobile wireless communications device **20** with further details of the touch activated sensors and Near Field Communication (NFC) circuit **51.** As illustrated, the capacitive touch sensors **52, 53** are located on either side of the housing **21** at a middle area of the device **20** such that when the user desires to activate the NFC circuit **51,** the user grasps with two fingers the touch sensors **52, 53** while the palm of the user's hand is placed against the front portion of the mobile wireless communications device. The user touches the rear portion of the device against another NFC device or tag while activating the NFC circuit by touching the side sensors **52, 53.** The third capacitive touch sensor **54** is located at the bottom of the mobile wireless communications device and when touched, such as by the palm of the user's hand, prevents power activation of the NFC IC chip **51.**

For example, when activating the NFC circuit 51 to use the NFC enabled device, typically the user will grasp the two capacitive touch sensors **52, 53** with two fingers, while the palm of the user's hand will be positioned at the front part of the mobile wireless communications device. The user touches the rear of the upper side of the housing against an NFC tag or other NFC-enabled device. The third touch sensor **54** is positioned and configured such that it is not touched and the NFC circuit enabled. The use of the third capacitive touch sensor will ensure that there are no "false positives" since, if it is touched while the other two touch sensors **52,53** are touched, the power is not enabled to the NFC IC chip even though the capacitive touch sensors are activated. When the user is regularly holding the device for email messaging or telephone communications, the third sensor is touched and activated. Even accidental touching to the side sensors **52, 53** will not activate the NFC circuit.

As shown in FIG. 4, a power circuit **55a** supplies power to the side mounted capacitive touch sensors on either side of the housing. A power circuit **55b** supplies power to the third capacitive touch sensor **54.** The NFC IC chip **51** includes an antenna "loop" circuit **56** configured for NFC communications. The NFC chip is connected to the other circuitry such as the microprocessor, data storage, and display as non-limiting examples, and shown by the block at **57,** corresponding to many of the circuit functions shown at Blocks **48, 50** in FIG. 1. A power circuit **58** for the device is connected into a switch circuit **59,** which also connects the capacitive touch sensors **52, 53, 54** such that power cannot be provided to the NFC IC chip **51** unless the switch circuit **59** enables the power, such as when the two capacitive touch sensors **52, 53** at the side are touched. Of course, if the third sensor is touched **54,** the switch **59** does not enable power.

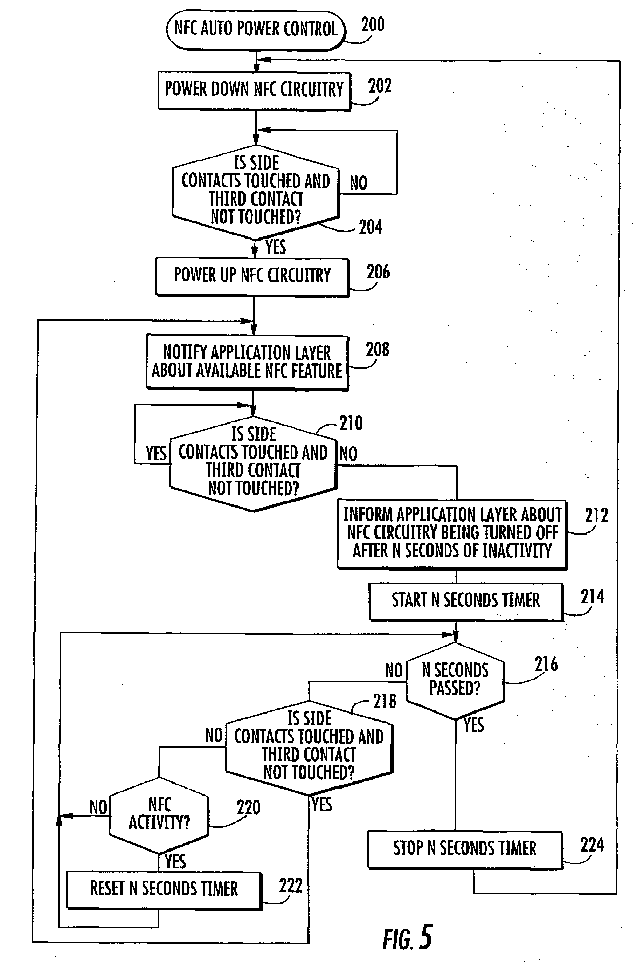

FIG. 5 is a high-level flow chart illustrating a basic method or sequence of steps for operation of the mobile wireless communication device with a touch activated NFC circuitry and shows the NFC automatic power control as a start of initiation at block 200. The NF circuitry is powered down (block **202**). A determination is made if the side contacts are touched and the third contact is not touched (block **204**). If not the loop continues and if yes the NFC circuitry is powered up (block **206**). At this time the application layer is notified about any available NFC features (block **208**). A determination is made if the side contacts are touched and third contact not touched (block **210**). If yes the loop continues and if not the application is informed about the NFC circuitry being turned off after N seconds of inactivity (block **212**). The end seconds timer is started (block **214**) and a determination is made if N seconds has passed (block **216**). If not than a determination is made if the side contacts are touched and third contact is not touched (block **218**). If yes then the loop continues back to the beginning of block **208** and if not then a determination is made concerning the NFC activity (block **220**). If not then the loop continues to beginning of the block **216** and if yes then the end seconds timer is reset (block 222). If the end seconds has passed to block **216,** then the end seconds timer is stopped (block **224**).

It should be understood that the capacitive touch sensors can be formed from different materials including polyester-based capacitors and similarly formed materials. Typically, as illustrated in FIG. 4, each capacitive touch sensor **52, 53, 54** may include a capacitive sensor portion (SEN) **52a, 53a, 54a** and capacitance-to-digital converter (CDC) **52b, 53b** and **54b** that are each operable with a touch sensor processor circuit **52c,** 53c, and **54c** of the mobile wireless communications device. The capacitive touch sensors **52,53,54** could be manufactured using traces on standard two- or four-layer printed circuit board or on a flex circuit. Each capacitance-to-digital converter **52b, 53b** and **54b** could be positioned on one capacitance sensor board (not shown) with each capacitance-to-digital converter including various sensor inputs and an excitation source.

It is possible for each capacitive touch sensor **52, 53, 54** to include a glass overlay, with as much as few millimeters. It should be understood that the capacitive touch sensors **52, 53, 54** could use conductors that interact with electric fields and are operable with finger touching because the human body contains conductive electrolytes covered by the skin as a lossy dielectric. The fingers can make capacitive touch sensing possible even with thick glass overlays. The sizes of the sensors can vary also. For example, a button diameter as part of a capacitive touch sensor button could be about 10 millimeters, the average size of an adult fingertip. Any printed circuit board used with such layers could include a ground layer and a circular cut-out with a sensor in the middle. The PCB could be formed from FR4 in one non-limiting example. The dielectric constant could influence how tightly the electric field energy can pack into the material as the electric field tries to find a shorter path.

The capacitive touch sensors could include a programmable current source, precision analog comparator and analog multiplexer bus that can sequence through an array of different touch sensors or one sensor. A relaxation oscillator could function as the capacitive touch sensor. The capacitive touch sensor could include circuitry having an output from a comparator that is fed into a clock input of a PWM that gates a counter. A finger positioned on the sensor could increase the capacitance, thus, increasing the counts. Different capacitive touch sensors, as known to those skilled in the art, could be used besides those types of sensors as described above.

Many different types of NFC IC circuit chips can possibly be used in accordance with non-limiting examples of the patent invention. The NFC IC circuit chip could provide an interface that operates in both an active and passive mode and transfers data using load modulation while also allowing for card emulation, such as ticketing applications. The NFC IC circuit chip could be a system-on-chip solution. It is also possible to integrate the NFC with a Bluetooth, WiFi or UWB chip set because many of the processes and components required by these RF-based technologies such as the antenna, power, clock, data bus, and other components are the same. Different types of components could also be used, for example, the PN65K Near Field Communication (NFC) smart connect module such as manufactured by NXP, founded by Phillips Corporation, or the Near Field Communication PN531 microprocessor based transmission module manufactured by Phillips Semiconductor.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A mobile wireless communications device (20), and being **characterized by**:
a housing (21);
a circuit board (67)carried by the housing;
radio frequency (RF) circuitry and a processor carried by the housing and operative with each other;
a Near Field Communications (NFC) circuit (51) positioned on the circuit board and operative with the processor for communicating in accordance with a NFC communications protocol; and
a first touch activated sensor (52) supported by the housing; and
a second touch activated sensor (53) supported by the housing;
the first and second touch activated sensors, when both touched, cooperating to enable operation of the NFC circuit to establish NFC communications from the communications device.

2. The mobile wireless communications device according to Claim 1, and further comprising a circuit board for supporting the RF circuitry.

3. The mobile wireless communications device according to Claim 1, and further comprising a circuit board for supporting the processor.

4. The mobile wireless communications device according to Claim 1, wherein said first touch activated sensor is positioned to be touched by at least one finger of a user when the housing is manually grasped and placed near another NFC enabled tag or device.

5. The mobile wireless communications device according to Claim 1, wherein said housing comprises first and second opposing sides, and wherein the first and second touch activated sensors are positioned at the first and second opposing sides, respectively.

6. The mobile wireless communications device according to Claim 1, wherein said first touch activated sensor comprises a capacitive touch sensor.

7. The mobile wireless communications device according to Claim 5, wherein said capacitive touch sensor comprises a capacitance-to-digital converter and processor associated therewith.

8. The mobile wireless communications device according to Claim 1, wherein said NFC circuit comprises a NFC integrated circuit (IC) chip mounted on a circuit board.

9. The mobile wireless communications device according to Claim 1, and further comprising a touch activated sensor operative with said first touch activated sensor for ensuring there are no false positives when the NFC circuit is enabled.

10. A method for enabling Near Field Communications (NFC) within a mobile wireless communications device (20), and being **characterized by**:
providing a housing (21), a circuit board carried by the housing, radio frequency (RF) circuitry and a processor carried by the housing and operative with each other, and a Near Field Communications (NFC) circuit (51) positioned on the circuit board and operative with the processor for communicating in accordance with a NFC communications protocol;
activating first and second touch activated sensors (52,53) positioned on the housing for enabling the NFC circuit; and
positioning the housing adjacent another NFC enabled tag or device to establish NFC communications between the mobile wireless communications device and the NFC enabled tag or device.

11. The method according to Claim 10, wherein the housing has first and second sides, and wherein the first and second touch activated sensors are positioned at the first and second sides, respectively.

12. The method according to Claim 10, which further comprises forming the first touch activated sensor as a capacitive touch sensor.

13. The method according to Claim 10, which further comprises switching power into the NFC circuit for enabling same after the touch activated sensor is touched.

## Patentansprüche

1. Mobile Drahtloskommunikations-Vorrichtung (20), die durch Folgendes **gekennzeichnet** ist:
ein Gehäuse (21),
eine Platine (67), die vom Gehäuse getragen ist,
eine Hochfrequenz(HF)-Schaltung und einen Prozessor, die von dem Gehäuse getragen sind und miteinander betrieben werden,
eine Nahfeldkommunikations(NFC)-Schaltung (51), die auf der Platine angeordnet ist und mit dem Prozessor zum Kommunizieren gemäß einem NFC-Kommunikationsprotokoll betrieben wird, und
ein erster berühraktivierter Sensor (52), der vom Gehäuse gestützt ist,
ein zweiter berühraktivierter Sensor (53), der vom Gehäuse gestützt ist,
wobei der erste und der zweite berühraktivierte Sensor zusammenarbeiten, wenn beide berührt sind, um einem Betrieb der NFC-Schaltung zu ermöglichen, um NFC-Kommunikationen von der Kommunikationsvorrichtung aufzubauen.

2. Mobile Drahtloskommunikations-Vorrichtung nach Anspruch 1, die ferner eine Platine zum Unterstützen der HF-Schaltung aufweist.

3. Mobile Drahtloskommunikations-Vorrichtung nach Anspruch 1, die ferner eine Platine zum Unterstützen des Prozessors aufweist.

4. Mobile Drahtloskommunikations-Vorrichtung nach Anspruch 1, wobei der erste berühraktivierte Sensor angeordnet ist, um von mindestens einem Finger eines Benutzers berührt zu werden, wenn das Gehäuse manuell ergriffen ist und nahe einem/einer weiteren NFC-befähigten Etikett oder Vorrichtung plaziert ist.

5. Mobile Drahtloskommunikations-Vorrichtung nach Anspruch 1, wobei das Gehäuse eine erste und eine zweite gegenüberliegende Seite aufweist und der erste und der zweite berühraktivierte Sensor an der ersten bzw. der zweiten gegenüberliegenden Seite angeordnet sind.

6. Mobile Drahtloskommunikations-Vorrichtung nach Anspruch 1, wobei der erste berühraktivierte Sensor einen kapazitiven Berührungssensor aufweist.

7. Mobile Drahtloskommunikations-Vorrichtung nach Anspruch 5, wobei der kapazitive Berührungssensor einen Kapazität-zu-digital-Wandler und einen damit verknüpften Prozessor aufweist.

8. Mobile Drahtloskommunikations-Vorrichtung nach Anspruch 1, wobei die NFC-Schaltung einen an einer Platine befestigten NFC- integrierten Schaltkreis (IC)-Chip aufweist.

9. Mobile Drahtloskommunikations-Vorrichtung nach Anspruch 1, die ferner einen berühraktivierten Sensor aufweist, der mit dem ersten berühraktivierten Sensor zum Sicherstellen, dass es keine falschen Positiven gibt, wenn die NFC-Schaltung angeschaltet ist, betrieben wird.

10. Verfahren zum Ermöglichen von Nahfeldkommunikation (NFC) in einer mobilen Drahtloskommunikations-Vorrichtung (20), die durch Folgendes **gekennzeichnet** ist:
Bereitstellen eines Gehäuses (21), einer Platine, die von dem Gehäuse getragen ist, Hochfrequenz(HF)-Schaltung und einen Prozessor, die von dem Gehäuse getragen sind und miteinander betrieben werden, und eine Nahfeldkommunikations(NFC)-Schaltung (51), die auf der Platine angeordnet ist, und mit dem Prozessor zum Kommunizieren gemäß einem NFC-Kommunikationsprotokoll betrieben wird,
Aktivieren eines ersten und eines zweiten berühraktivierten Sensors (52, 53), der am Gehäuse zum Ermöglichen der NFC-Schaltung angeordnet ist, und
Anordnen des Gehäuses an einem/einer weiteren NFC-befähigten Etikett oder Vorrichtung angrenzend, um NFC-Kommunikationen zwischen der mobilen Drahtloskommunikations-Vorrichtung und dem/der NFC-befähigten Etikett oder Vorrichtung aufzubauen.

11. Verfahren nach Anspruch 10, wobei das Gehäuse eine erste und eine zweite Seite aufweist und der erste und der zweite berühraktivierte Sensor an der ersten bzw. der zweiten Seite angeordnet sind.

12. Verfahren nach Anspruch 10, das ferner Ausbilden des ersten berühraktivierten Sensors als kapazitiven Berührungssensor aufweist.

13. Verfahren nach Anspruch 10, das ferner Umschalten der Leistung in die NFC-Schaltung zum Ermöglichen derselben, nachdem der berühraktivierte Sensor berührt ist.

## Revendications

1. Dispositif de communication mobile sans fil (20), **caractérisé par**:
un boîtier (21) ;
une carte de circuits (67) supportée par le boîtier;
un ensemble de circuits pour fréquences radio (RF) et un processeur supportés par le boîtier et pouvant fonctionner l'un avec l'autre ;
un circuit de communication en champ proche (NFC) (51) positionné sur la carte de circuits et coopérant avec le processeur pour communiquer selon un protocole de communication NFC ;
un premier détecteur activé par le toucher (52), supporté par le boîtier ; et
un second détecteur activé par le toucher (53), supporté par le boîtier ;
dans lequel les premier et second détecteurs activés par le toucher, lorsqu'ils sont touchés tous les deux, coopèrent pour permettre le fonctionnement du circuit NFC dans le but d'établir une communication NFC à partir du dispositif de communication.

2. Dispositif de communication mobile sans fil selon la revendication 1, comprenant en outre une carte de circuits destinée à supporter l'ensemble de circuits RF.

3. Dispositif de communication mobile sans fil selon la revendication 1, comprenant en outre une carte de circuits destinée à supporter le processeur.

4. Dispositif de communication mobile sans fil selon la revendication 1, dans lequel ledit premier détecteur activé par le toucher est positionné pour être touché par au moins un doigt de l'utilisateur lorsque le boîtier est saisi manuellement et placé près d'un autre badge ou dispositif à fonctions NFC.

5. Dispositif de communication mobile sans fil selon la revendication 1, dans lequel ledit boîtier comprend un premier et un second côté qui s'opposent, et dans lequel les premier et second détecteurs activés par le toucher sont placés sur le premier et le second côté qui s'opposent, respectivement.

6. Dispositif de communication mobile sans fil selon la revendication 1, dans lequel ledit premier détecteur activé par le toucher est constitué d'un capteur tactile capacitif.

7. Dispositif de communication mobile sans fil selon la revendication 5, dans lequel ledit capteur tactile capacitif comprend un convertisseur capacité-numérique et un processeur associé.

8. Dispositif de communication mobile sans fil selon la revendication 1, dans lequel ledit circuit NFC comprend une puce de circuit intégré NFC montée sur une carte de circuits.

9. Dispositif de communication mobile sans fil selon la revendication 1, comprenant en outre un détecteur activé par le toucher, destiné à coopérer avec ledit premier détecteur activé par le toucher afin d'assurer l'absence de faux positifs lorsque le circuit NFC est validé.

10. Procédé de validation des communications en champ proche (NFC) sur un dispositif de communication mobile sans fil (20), **caractérisé par** les étapes consistant à :
fournir un boîtier (21), une carte de circuits supportée par le boîtier, un ensemble de circuits pour fréquences radio (RF) et un processeur supportés par le boîtier et pouvant fonctionner l'un avec l'autre, et un circuit NFC (51) positionné sur la carte de circuits et coopérant avec le processeur pour communiquer selon un protocole de communication NFC ;
activer un premier et un second détecteur activés par le toucher (52, 53), positionnés sur le boîtier, afin de valider le circuit NFC ; et
positionner le boîtier près d'un autre badge ou dispositif à fonctions NFC afin d'établir une communication NFC entre le dispositif de communication mobile sans fil et le badge ou dispositif à fonctions NFC.

11. Procédé selon la revendication 10, dans lequel le boîtier comprend un premier et un second côté, et dans lequel les premier et second détecteurs activés par le toucher sont placés sur le premier et le second côté, respectivement.

12. Procédé selon la revendication 10, comprenant en outre l'étape consistant à réaliser le premier détecteur activé par le toucher sous la forme d'un capteur tactile capacitif.

13. Procédé selon la revendication 10, comprenant en outre l'étape consistant à commuter l'alimentation du circuit NFC pour le valider après que le capteur activé par le toucher a été touché.
